# EUROPEAN PATENT SPECIFICATION

(11) **EP 4 140 770 B1**
(45) Date of publication and mention of the grant of the patent: **18.09.2024**
(21) Application number: 22191643.0
(22) Date of filing: 23.08.2022
(51) Int. Cl.: B60C 9/22, B29D 30/02, B29D 30/38, B60C 9/20

(54) **TIRE WITH SHOULDER REINFORCEMENT**
REIFEN MIT SCHULTERVERSTÄRKUNG
PNEU AVEC RENFORT D'ÉPAULE

(30) Priority: 25.08.2021 US 202117411629
(43) Date of publication of application: 01.03.2023
(73) Proprietor: The Goodyear Tire & Rubber Company, Akron, OH 44316 (US)
(72) Inventor: MERSCH, Romain Jack Rodolphe, F-57570 Boust (FR)
(74) Representative: Kutsch, Bernd

(56) References cited:
- JP-B2- 4 373 099
- LU-A1- 100 828
- US-B2- 9 346 320

## Description

### Field of the invention

The present invention relates to pneumatic and non-pneumatic tires and, more specifically, to tires for aircraft service having a shoulder reinforcement or to other tires with a shoulder reinforcement such as UHP passenger tires or race tires.

### Background of the invention

Tires for service on aircraft landing gears are exposed to severe operating conditions of load and acceleration/speed. In particular, aviation tires coupled with the landing gears of large commercial airliners are susceptible to severe deformation upon landing, takeoffs, and controlled movement of the aircraft under its own power while on the ground (e.g., taxiing, parking, etc.). Loss of a landing gear tire on takeoff (e.g., a blowout, mechanical failure, etc.) may result in an aborted take-off or an emergency landing. Loss of a landing gear tire upon landing may result in an inability to halt the airliner's momentum, leading to runway overshoot. Airliners often elevate tire temperature by taxiing long distances and/or by taxiing at high speed, which may increase the susceptibility to blowouts during takeoff or after landing.

Typically, the belt package incorporated into conventional aviation tires includes a number of cut belt layers and a number of spiral wound layers formed from cord reinforced strip(s) wound about the circumference of belt layers of the tire with a zero degree spiral overlay. The spiral wound layers terminate proximate the tire shoulder of the tire with little or no overlap, as the winding direction is reversed to apply the successive spiral wound layers.

One conventional approach for improving tire durability is a uniform increase in the number of belt layers from crown to shoulder. However, this approach may result in significant tire weight increases. Tire weight increases from the added layers is contrary to another tire design parameter for minimizing the net weight of the airliner. Increasing the number of belt layers uniformly between the crown and the shoulder also significantly increases the tire's production cost (e.g., more material, more complexity, more waste, etc.). For these and other reasons, it would be desirable to provide a lightweight tire for airliner landing gears characterized by improved durability and greater load capability.

US 9,346,320 B2, LU 100 828 A1 and JP 4 373099 B2 describe a tire in accordance with the preamble of claim 1.

### Summary of the Invention

The invention relates to a tire in accordance with claim 1 and to a method in accordance with claim 15.

Dependent claims refer to preferred embodiments of the invention.

A tire in accordance with a preferred aspect of the invention includes a carcass, a tread disposed radially outward of the carcass, a sidewall including a shoulder extends toward the tread, and a reinforcing structure positioned radially between the carcass and the tread. The reinforcing structure includes one or a plurality of belts extending axially toward the shoulder and an overlapping spiral wound strip positioned at a radially outermost portion of the reinforcing structure. The overlapping spiral wound strip includes a uniform width having groups of four first cords with a single second cord therebetween. The first cords include a hybrid construction, and the second cords include a single material construction.

A method of constructing a tire in accordance with a preferred aspect of the invention includes the steps of: axially extending a carcass from a first bead portion to a second bead portion, axially extending a tread radially outward of the carcass, extending a sidewall radially outward to a shoulder adjacent the tread; positioning a reinforcing structure radially between the carcass and the tread, spirally winding an overlapping strip at a radially outermost portion of the reinforcing structure. The overlapping strip includes a uniform width having groups of four first cords with a single second cord therebetween. The first cords include a hybrid construction, and the second cords includes a single material construction.

According to a preferred aspect of the invention, the first cords have a hybrid construction of nylon and aramid.

According to a preferred aspect of the invention, the second cords have a full nylon construction.

According to a preferred aspect of the invention, the first cords have a hybrid construction, and the second cords have a 1400dtex/2 single material construction.

According to a preferred aspect of the invention, the first cords have a full nylon construction, and the second cords have a 1840 dtex/3 full rayon construction.

According to a preferred aspect of the invention, the first cords have a full aramid construction.

According to a preferred aspect of the invention, the second cords have a 2 + 4 full nylon construction.

### Definitions

"Axial" and "axially" means the lines or directions that are parallel to the axis of rotation of the tire.

"Carcass" means the tire structure apart from the belt structure, tread, undertread, and sidewall rubber over the plies, but including the beads.

"Cord" means one of the reinforcement strands which the plies in the tire comprise.

"Crown" refers to substantially the outer circumference of a tire where the tread is disposed.

"Circumferential" means circular lines or directions extending along the surface of the sidewall perpendicular to the axial direction.

"Equatorial plane (EP)" means the plane perpendicular to the tire's axis of rotation and passing through the center of its tread.

"Inner" means toward the inside of the tire.

"Lateral" means a direction parallel to the axial direction, as in across the width of the tread or crown region.

"Outer" means toward the tire's exterior.

"Pneumatic tire" means a laminated mechanical device of generally toroidal shape, usually an open-torus having beads and a tread and made of rubber, chemicals, fabric and steel or other materials.

"Radial" and "radially" mean directions radially toward or away from the axis of rotation of the tire.

"Shoulder" means the upper portion of the sidewall just below the tread edge.

"Sidewall" means that portion of a tire between the tread and the bead area.

"Tread" means a molded rubber component which, when bonded to a tire casing, includes that portion of the tire that comes into contact with the road when the tire is normally inflated and under normal load.

### Brief Description of the Drawings

The invention will be described by way of example and with reference to the accompanying drawings in which:
FIG. 1 is a schematic view of an example belt package for use with the present invention;
FIG. 2 is a schematic cross-sectional view of the example tire of FIG. 1;
FIG. 3 is a schematic enlarged view of a portion of FIG. 2;
FIG. 4 is a schematic view of another example belt package for use with the present invention; and
FIG. 5 is a schematic cross-sectional view of an overlay strip in accordance with the present invention.

### Detailed Description of Preferred Embodiment the invention

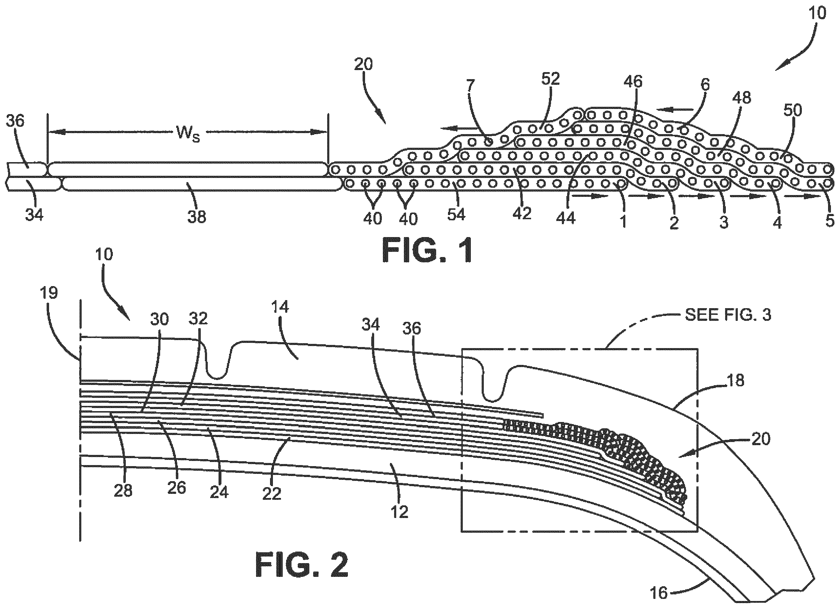

With reference to FIGS. 1-3, an example pneumatic aviation tire 10 suitable for airliner service as a nose gear tire for instance includes a carcass 12, a ground-engaging tread 14, a sidewall 16, and a shoulder 18 defined by the junction of the sidewall 16 and the tread 14. When mounted on the airliner, the tread 14 provides traction and the tire 10 contains a fluid (e.g., air, nitrogen, etc.) that sustains part of the airliner load. The example tire 10 preferably has a mirror symmetry reflecting about an equatorial plane 19 bisecting tire 10. Arranged between the carcass 12 and the tread 14 is a belt package, generally indicated by reference numeral 20, comprising one belt, two belts or preferably a plurality of, for example five, six or seven, individual cut belt plies or layers 22, 24, 26, 28, 30, 32 and a plurality of, for example one, two or three, spiral wound belt layers 34, 36 positioned radially-outward from the one or more cut belt layers 22, 24, 26, 28, 30, 32. The number of cut belt layers and spiral wound layers in the belt package 20 may vary according to the tire construction. If the tire 10 is a passenger tire, it may be sufficient for instance to use just one or two belt layers, i.e., only one or two of the individual cut belt plies or layers 22, 24, 26, 28, 30, 32, in the belt package 20.

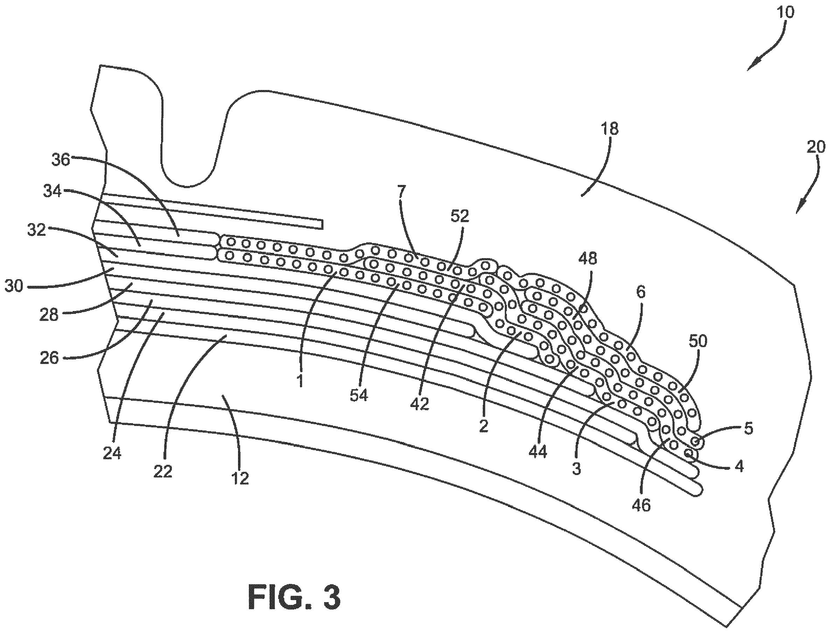

As best shown in FIGS. 1 and 3, both of the spiral wound belt layers 34, 36 are formed by a continuous rubberized flat strip 38 that is wound circumferentially (e.g., with a -5 degree to +5 degree spiral overlay) about the tire 10. The overlay 34, 36 extends one tire shoulder 18 to the other tire shoulder (not shown). The flat strip 38 is reinforced with multiple embedded preferably high modulus, preferably essentially inextensible, cords 40 of, for example, nylon, rayon, polyester, aramid, glass, and/or metal disposed spatially with a substantially parallel arrangement of one to another and covered by an elastomer matrix, such as a cured rubber casing. The width Ws of flat strip 38 preferably ranges from 6 mm to 20 mm or from 6 to 14 mm such as 10 mm. The thickness of the flat strip 38 may approximate several millimeters. The density of cords 40 of the flat strip 38 is preferably from 18 to 22 per 2.54 cm ("ends per inch"). During construction of tire 10, the flat strip 38 is wound circumferentially about a crowned building drum with the flat strip 38 being shifted by a transverse, or axial, distance approximately equal to, or slightly greater than, the width Ws with each individual turn.

The axial dimension of the one or more cut belt layers 22, 24, 26, 28, 30, 32 is preferably selected such that corresponding lateral side edges are tiered or staggered with an overlapping relationship near the tire shoulder 18. For example, the cut belt layer 22 preferably extends laterally/axially for a greater lateral distance from the equatorial plane 19 than the cut belt layer 24 so that the terminal side edge of the cut belt layer 24 overlaps between layers 22 and 26.

A plurality of overlapping spiral wound shoulder layers 42, 44, 46, 48, 50, 52, 54, preferably 3 to 8 or 5 to 7 such shoulder layers, is provided in the tire shoulder 18.

Each of the spiral wound shoulder layers 42, 44, 46 is preferably defined by a single circumferential flat strip, similar to the flat strip 38, in which adjacent turns are shifted laterally by less than one strip width (Ws) so that the shoulder layers 42, 44, 46 have a partially overlapping, or staggered relationship (FIG. 3). In other words, the winding pitch for spiral wound shoulder layers 42, 44, 46 is preferably less than one strip width (Ws) per revolution. The remaining spiral wound shoulder layers 48, 50, 52, 54 are preferably applied with a winding pitch equal to one strip width (Ws) per revolution such that there is no overlapping build up in the tire crown region beyond the overlap afforded by spiral wound belt layers 34, 36. The lateral shift of less than one strip width (Ws) is shown in FIGS. 1-3 as adjacent turns of the flat strip 38 contribute to the partially overlapping relationship. In a central region of the tire shoulder 18, an overlapping relationship may thereby be established to provide an ultimate thickness equivalent to for instance six strip thicknesses.

With continued reference to FIGS. 1-3, to apply the spiral wound shoulder layers 42, 44, 46, 48, 50, 52, 54, the first spiral wound belt layer 34 is applied to the tire 10. After the shoulder layer 54 is applied, the winding pitch is changed from greater than or equal to one strip width (Ws) per revolution (e.g., a -5 degree to +5 degree pitch) to a winding pitch that is less than one strip width (Ws) per revolution. In the example belt package 20 of FIGS. 1-3, the spiral wound shoulder layers 42, 44, 46 is shifted laterally by approximately 0.2 of the strip width (Ws) per revolution. The spiral wound shoulder layers 42, 44, 46 are for instance applied serially or sequentially from left to right, as best visible in FIG. 1. The spiral wound shoulder layers 48, 50 are preferably applied with a winding pitch of approximately zero degrees so that the shoulder layers 48, 50 roughly overlap the shoulder layer 48. Then, the winding pitch is preferably reverted to greater than or equal to one strip width (Ws) per revolution. The spiral wound shoulder layer 52 is preferably applied with a unitary winding pitch of one strip width (Ws), in an opposite or reverse winding direction from the shoulder layers 42, 44, 46. After the shoulder layer 52 is applied, the circumferential turns of the flat strip 38 transitions into forming the spiral wound belt layer 36. At the tire shoulder opposite the tire shoulder 18, another set of spiral wound shoulder layers (not shown but similar to spiral wound shoulder layers 42, 44, 46, 48, 50, 52) are preferably applied to tire 10.

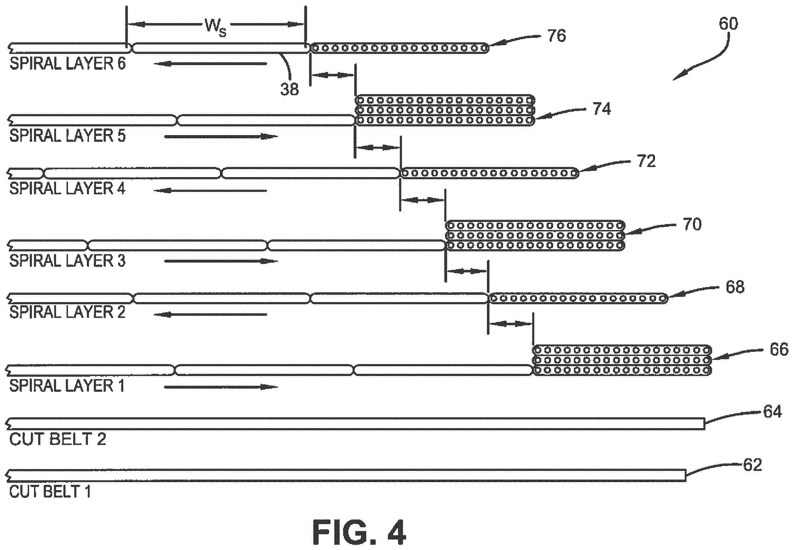

With reference to FIG. 4, another example belt package 60 for use with the present invention is shown. The belt package 60 for an example tire (not shown, but similar to the tire 10 of FIGS. 1-3) includes one, two or preferably a plurality of cut belts 62, 64 and a plurality of spiral wound belt layers 66, 68, 70, 72, 74, 76 wound with a zero degree spiral. The laterally outermost turn of the spiral wound belt layer 66 is preferably aligned radially with the free side edge of the underlying cut belt 64. The laterally outermost turn of the spiral wound belt layer 68 are preferably shifted laterally by less than one strip width (Ws), although the winding pitch remains constant at greater than or equal to about one strip width (Ws). Each successive spiral wound belt layer 70, 72, 74, 76 may likewise be shifted laterally by less than one strip width (Ws) while the winding pitch remains constant at greater than or equal to about one strip width (Ws). In other words, when the winding direction is reversed at the turn around positions at each tire shoulder 18 (FIG. 1), an initial strip turn of each spiral wound belt layer 66, 68, 70, 72, 74, 76 may be shifted laterally by less than one strip width (Ws) so that radially adjacent pairs of the spiral wound belt layers 66, 68, 70, 72, 74, 76 only partially overlap. Alternating spiral wound belt layers, for example spiral wound belt layers 66, 68, 72, preferably include multiple overlapping initial turns of the flat strip 38 wound with a zero pitch. In the example shown, two cut belts and six spiral wound belt layers are provided in the belt package 60 and the lateral shift distance for successive spiral wound belt layers is about 0.33 of the strip width (Ws).

The overlapping turns of flat strip 38 at the lateral edge of the spiral wound belt layers create a tiered arrangement such that the lateral shift in the starting location for successive spiral wound belt layers 66, 68, 70, 72, 74, 76 and the lateral edges among successive spiral wound belt layers 66, 68, 70, 72, 74, 76 are not coincident. The spiral wound belt layer 66 contributes for instance three overlapping spiral wound shoulder layers. The spiral wound belt layer 68 for instance contributes one partially overlapping spiral wound shoulder layer. The spiral wound belt layer 70 for instance contributes three partially overlapping spiral wound shoulder layers.

In accordance with the present invention, an overlay construction, such as above described 34, 36, 38, includes multiple cord materials. Current manufacturing methods allow an overlay construction in accordance with the present invention to include multiple reinforcement cords co-extruded in a single step. An overlay strip, such as the flat strip 38, thus preferably comprises two or more single end dipped cords of different materials. The overlay strip preferably has a width between 10 mm and 15 mm, or 10 mm. For example, the overlay strip width preferably includes seven hybrid cords of aramid/nylon and two nylon cords, in place of eight cords of hybrid material for a conventional overlay strip, such as the spiral layers 34, 36 and the flat strip 38.

Conventional overlay strips have been made entirely of a single reinforcement material, such as full nylon, hybrid nylon and aramid, or full aramid. The application of single dipped fabrics (made of a single cord type), one at a time, for calendering/slitting operations allows varying cord types within a single overlay strip. Such a combination of different cord materials within a single strip may thereby enhances functional properties while decreasing cost and/or weight of the overlay package. The insertion of one of more full nylon cords into an overlay strip usually made entirely of hybrid cords further increases shrink force at higher speeds when the tire starts to heat-up, leading to a more stable tire circumference at high speeds, with potential benefits in high speed performance.

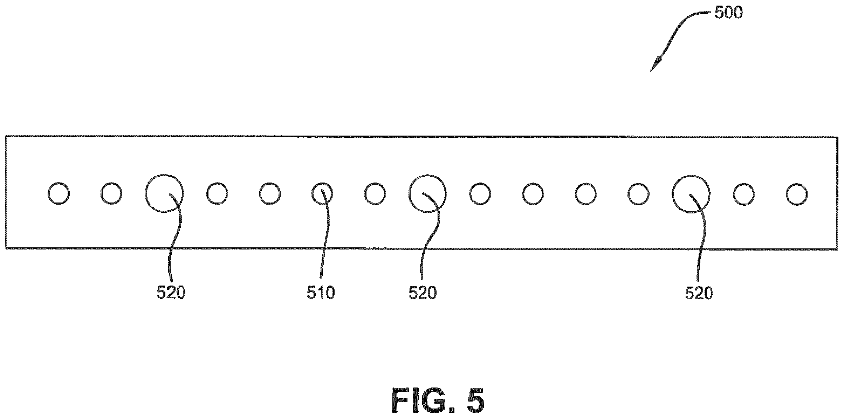

As shown in FIG. 5, the width of an example overlay strip 500 in accordance with the present invention includes groups of four first cords 510 with a single second cord 520 therebetween. Alternatively, 2 to 8 such first cords 510 with 1 to 4 such second singe cords 520 therebetween may be used.

The first cords 510 preferably include a hybrid construction, a full nylon construction, or a full aramid constriction. The second cords 520 preferably include a hybrid construction, a full nylon construction, or a full aramid constriction.

In a first example, the first cords 510 are a hybrid cord of nylon and aramid, and the second cords 520 are full nylon cords. In a second example, the first cords 510 are of a hybrid construction and the second cords 520 are of a single material construction, preferably a 1400dtex/2 single material construction. In a third example, the first cords 510 are full nylon cords and the second cords 520 are of a full rayon construction, preferably of a 1840 dtex/3 full rayon construction. In a fourth example, the first cords 510 are of full aramid construction and the second cords 520 are of a 2 + 4 full nylon construction.

## Claims

1. A tire comprising a carcass, a tread (14) disposed radially outward of the carcass (12), a sidewall (16) including a shoulder (18) extending toward the tread (14), and a reinforcing structure (20, 60) positioned radially between the carcass (12) and the tread (14), the reinforcing structure (20, 60) including one, two or a plurality of belts (22, 24, 26, 28, 30, 32, 62, 64) extending axially toward the shoulder (18) and an overlapping spirally wound strip (500) positioned at a radially outermost portion of the reinforcing structure (20, 60), wherein the overlapping spirally wound strip (500) has a preferably uniform width and comprises groups of from 2 to 8 first cords (510) together with of from 1 to 4 second cords (520) therebetween, **characterized in that** (i) the material of the first cords (510) is different from the material of the second cords (520) and **in that** the tire is an aircraft tire; and/or (ii) **in that** the diameter of the first cords (510) is different from the diameter of the second cords (520).

2. The tire of claim 1 wherein the strip comprises 3, 4 or 5 of said first cords (510) and 1, 2 or 3 of said second cords in a respective group.

3. The tire of claim 2 wherein the strip (500) has four of said first cords (510) and one of said second cords (520) in a respective group.

4. The tire of at least one of the previous claims wherein the first cords (510) are of a hybrid cord construction and the second cords (520) are of a single material construction, or wherein the second cords (520) are of a hybrid cord construction and the first cords (510) are of a single material construction

5. The tire of at least one of the previous claims wherein the first cords (510) are of a hybrid construction of nylon and aramid.

6. The tire of at least one of the previous claims wherein the second cords (520) are of a full nylon construction.

7. The tire of at least one of the previous claims wherein the first cords (510) are full nylon cords and the second cords (520) are full aramid cords, or wherein the first cords (510) are full aramid cords and the second cords (520) are full nylon cords.

8. The tire of at least one of the previous claims wherein the first cords (510) are full nylon cords and the second cords (520) are full rayon cords, or wherein the first cords (510) are full rayon cords and the second cords (520) are full nylon cords.

9. The tire of at least one of the previous claims wherein the second cords (520) are of a 1400dtex/2 single material construction or wherein the second cords (520) are of a 1840 dtex/3 full rayon construction.

10. The tire of at least one of the previous claims wherein the first cords (510) are of a full aramid construction.

11. The tire of at least one of the previous claims wherein the second cords (520) or of a 2 + 4 full nylon construction.

12. The tire of at least one of the previous claims wherein the diameter of the second cords (520) is in a range of from 120% to 220%, preferably 140% to 180%, of the diameter of the first cords (510).

13. The tire of at least one of the previous claims wherein the strip (500) has an axial width in a range of from 8 to 20 mm, preferably 10 to 15 mm.

14. The tire of at least one of the previous claims wherein the tire has the features of option (ii) of claim 1 and is an aircraft tire.

15. A method of constructing a tire (10), preferably an aircraft tire, the method comprising the steps: axially extending a carcass (12) from a first bead portion to a second bead portion, disposing a tread (14) radially outward of the carcass (12), providing a sidewall (16) including a shoulder (18) extending toward the tread (14), providing a reinforcing structure (20, 60) and positioning the reinforcing structure (20, 60) radially between the carcass (12) and the tread (14), and spirally winding an overlapping strip (500) at a radially outermost portion of the reinforcing structure (20, 60), wherein the overlapping spirally wound strip (500) has a preferably uniform width and comprises groups of from 2 to 8 first cords (510) together with of from 1 to 4 second cords (520) therebetween, **characterized in that** (i) the material of the first cords (510) is different from the material of the second cords (520) and **in that** the tire is an aircraft tire; and/or (ii) **in that** the radial thickness of the first cords (510) is different from the radial thickness of the second cords (520).

## Patentansprüche

1. Reifen, der eine Karkasse, eine radial außerhalb der Karkasse (12) angeordnete Lauffläche (14), eine eine sich zur Lauffläche (14) hin erstreckende Schulter (18) umfassende Seitenwand (16) und eine Verstärkungsstruktur (20, 60), die radial zwischen der Karkasse (12) und der Lauffläche (14) angeordnet ist, umfasst, wobei die Verstärkungsstruktur (20, 60) einen, zwei Gürtel (22, 24, 26, 28, 30, 32, 62, 64) oder mehrere davon umfasst, die sich axial in Richtung der Schulter (18) erstrecken, und einen überlappenden spiralförmig gewickelten Streifen (500), der an einem radial äußersten Abschnitt der Verstärkungsstruktur (20, 60) positioniert ist, umfasst, wobei der überlappende spiralförmig gewickelte Streifen (500) eine vorzugsweise gleichmäßige Breite aufweist und Gruppen von 2 bis 8 ersten Korden (510) zusammen mit 1 bis 4 zweiten Korden (520) dazwischen umfasst, **dadurch gekennzeichnet, dass** (i) das Material der ersten Korde (510) sich von dem Material der zweiten Korde (520) unterscheidet und dass der Reifen ein Flugzeugreifen ist; und/oder (ii) dass der Durchmesser der ersten Korde (510) sich von dem Durchmesser der zweiten Korde (520) unterscheidet.

2. Reifen nach Anspruch 1, wobei der Streifen 3, 4 oder 5 der oben genannten ersten Korde (510) und 1, 2 oder 3 der oben genannten zweiten Korde in einer jeweiligen Gruppe umfasst.

3. Reifen nach Anspruch 2, wobei der Streifen (500) vier der oben genannten ersten Korde (510) und einen der oben genannten zweiten Korde (520) in einer jeweiligen Gruppe aufweist.

4. Reifen nach mindestens einem der vorhergehenden Ansprüche, wobei die ersten Korde (510) aus einer Hybridkordkonstruktion bestehen und die zweiten Korde (520) aus einer Einzelmaterialkonstruktion bestehen, oder wobei die zweiten Korde (520) aus einer Hybridkordkonstruktion bestehen und die ersten Korde (510) aus einer Einzelmaterialkonstruktion bestehen

5. Reifen nach mindestens einem der vorhergehenden Ansprüche, wobei die ersten Korde (510) aus einer Hybridkonstruktion aus Nylon und Aramid bestehen.

6. Reifen nach mindestens einem der vorhergehenden Ansprüche, wobei die zweiten Korde (520) aus einer Vollnylonkonstruktion bestehen.

7. Reifen nach mindestens einem der vorhergehenden Ansprüche, wobei die ersten Korde (510) Vollnylonkorde und die zweiten Korde (520) Voll-Aramidkorde sind, oder wobei die ersten Korde (510) Voll-Aramidkorde und die zweiten Korde (520) Vollnylonkorde sind.

8. Reifen nach mindestens einem der vorhergehenden Ansprüche, wobei die ersten Korde (510) Vollnylonkorde und die zweiten Korde (520) Vollviskosekorde sind, oder wobei die ersten Korde (510) Vollviskosekorde und die zweiten Korde (520) Vollnylonkorde sind.

9. Reifen nach mindestens einem der vorhergehenden Ansprüche, wobei die zweiten Korde (520) aus einer 1400 dtex/2-Einzelmaterialkonstruktion bestehen oder wobei die zweiten Korde (520) aus einer 1840 dtex/3-Vollviskosekonstruktion bestehen.

10. Reifen nach mindestens einem der vorhergehenden Ansprüche, wobei die ersten Korde (510) aus einer Voll-Aramid-Konstruktion bestehen.

11. Reifen nach mindestens einem der vorhergehenden Ansprüche, wobei die zweiten Korde (520) aus einer 2 + 4 Vollnylonkonstruktion bestehen.

12. Reifen nach mindestens einem der vorhergehenden Ansprüche, wobei der Durchmesser der zweiten Korde (520) in einem Bereich von 120% bis 220%, vorzugsweise 140% bis 180%, des Durchmessers der ersten Korde (510) liegt.

13. Reifen nach mindestens einem der vorhergehenden Ansprüche, wobei der Streifen (500) eine axiale Breite in einem Bereich von 8 bis 20 mm, vorzugsweise 10 bis 15 mm, aufweist.

14. Reifen nach mindestens einem der vorhergehenden Ansprüche, wobei der Reifen die Merkmale der Option (ii) von Anspruch 1 aufweist und ein Flugzeugreifen ist.

15. Verfahren zum Herstellen eines Reifens (10), vorzugsweise eines Flugzeugreifens, wobei das Verfahren die folgenden Schritte umfasst: das axiale Erstrecken einer Karkasse (12) von einem ersten Wulstabschnitt zu einem zweiten Wulstabschnitt, das Anordnen einer Lauffläche (14) radial außerhalb der Karkasse (12), das Bereitstellen einer Seitenwand (16), die eine sich zur Lauffläche (14) hin erstreckende Schulter (18) umfasst, das Bereitstellen einer Verstärkungsstruktur (20, 60) und das Positionieren der Verstärkungsstruktur (20, 60) radial zwischen der Karkasse (12) und der Lauffläche (14), und das spiralförmige Aufwickeln eines überlappenden Streifens (500) an einem radial äußersten Abschnitt der Verstärkungsstruktur (20, 60), wobei der überlappende spiralförmig gewickelte Streifen (500) eine vorzugsweise gleichmäßige Breite aufweist und Gruppen von 2 bis 8 ersten Korden (510) zusammen mit 1 bis 4 zweiten Korden (520) dazwischen umfasst, **dadurch gekennzeichnet, dass** (i) das Material der ersten Korde (510) sich von dem Material der zweiten Korde (520) unterscheidet und dass der Reifen ein Flugzeugreifen ist; und/oder (ii) dass die radiale Dicke der ersten Korde (510) sich von der radialen Dicke der zweiten Korde (520) unterscheidet.

## Revendications

1. Bandage pneumatique qui comprend une carcasse, une bande de roulement (14) qui est disposée, dans la direction radiale, à l'extérieur de la carcasse (12), un flanc (16) qui englobe un épaulement (18) qui s'étend dans la direction de la bande de roulement (14), et une structure de renforcement (20, 60) qui est disposée, dans la direction radiale, entre la carcasse (12) et la bande de roulement (14), la structure de renforcement (20, 60) englobant, une, deux ceinture(s) (22, 24, 26, 28, 30, 32, 62, 64) ou plus qui s'étendent, dans la direction axiale, en direction de l'épaulement (18), ainsi qu'une bande chevauchante (500) enroulée en spirale qui est disposée à une portion la plus externe, dans la direction radiale, de la structure de renforcement (20, 60) ; dans lequel la bande chevauchante (500) enroulée en spirale possède une largeur, de préférence, uniforme, et comprend des groupes de 2 à 8 premiers câblés (510) de manière conjointe avec un nombre de 1 à 4 deuxièmes câblés (520) disposés entre les premiers cités, **caractérisé en ce que** (i) la matière des premiers câblés (510) est différente de la matière des deuxièmes câblés (520), et **en ce que** le bandage pneumatique est un bandage pneumatique destiné à un avion ; et/ou (ii) **en ce que** le diamètre des premiers câblés (510) est différent du diamètre des deuxièmes câblés (520).

2. Bandage pneumatique selon la revendication 1, dans lequel la bande comprend 3, 4 ou 5 câblés parmi lesdits premiers câblés (510) et 1, 2 ou 3 câblés parmi lesdits deuxièmes câblés dans un groupe respectif.

3. Bandage pneumatique selon la revendication 2, dans lequel la bande (500) possède quatre câblés parmi lesdits premiers câblés (510) et un câblé parmi lesdits deuxièmes câblés (520) dans un groupe respectif.

4. Bandage pneumatique selon au moins une des revendications précédentes, dans lequel les premiers câblés (510) possèdent une structure de câblé de type hybride et les deuxièmes câblés (520) possèdent une structure à base d'une seule matière ; ou dans lequel les deuxièmes câblés (520) possèdent une structure de câblé de type hybride et les premiers câblés (510) possèdent une structure à base d'une seule matière.

5. Bandage pneumatique selon au moins une des revendications précédentes, dans lequel les premiers câblés (510) possèdent une structure hybride à base de nylon et d'aramide.

6. Bandage pneumatique selon au moins une des revendications précédentes, dans lequel les deuxièmes câblés (520) possèdent une structure complètement à base de nylon.

7. Bandage pneumatique selon au moins une des revendications précédentes, dans lequel les premiers câblés (510) sont des câblés complètement à base de nylon et les deuxièmes câblés (520) sont des câblés complètement à base d'aramide ; ou dans lequel les premiers câblés (510) sont des câblés complètement à base d'aramide et les deuxièmes câblés (520) sont des câblés complètement à base de nylon.

8. Bandage pneumatique selon au moins une des revendications précédentes, dans lequel les premiers câblés (510) sont des câblés complètement à base de nylon et les deuxièmes câblés (520) sont des câblés complètement à base de rayonne ; ou dans lequel les premiers câblés (510) sont des câblés complètement à base de rayonne et les deuxièmes câblés (520) sont des câblés complètement à base de nylon.

9. Bandage pneumatique selon au moins une des revendications précédentes, dans lequel les deuxièmes câblés (520) possèdent une structure à base d'une seule matière de type 1400 dtex/2 ou dans lequel les deuxièmes câblés (520) possèdent une structure complètement à base de rayonne de type 1840 dtex/3.

10. Bandage pneumatique selon au moins une des revendications précédentes, dans lequel les premiers câblés (510) possèdent une structure complètement à base d'aramide.

11. Bandage pneumatique selon au moins une des revendications précédentes, dans lequel les deuxièmes câblés (520) possèdent une structure complètement à base de nylon de type 2 + 4.

12. Bandage pneumatique selon au moins une des revendications précédentes, dans lequel le diamètre des deuxièmes câblés (520) se situe dans une plage qui représente de 120 % à 220 %, de préférence de 140 % à 180 % du diamètre des premiers câblés (510).

13. Bandage pneumatique selon au moins une des revendications précédentes, dans lequel la bande (500) possède une largeur axiale qui se situe dans une plage allant de 8 à 20 mm, de préférence de 10 à 15 mm.

14. Bandage pneumatique selon au moins une des revendications précédentes, dans lequel le bandage pneumatique possède les caractéristiques de l'option (ii) de la revendication 1 et représente un bandage pneumatique destiné à un avion.

15. Procédé de confection d'un bandage pneumatique (10), de préférence d'un bandage pneumatique destiné à un avion, le procédé comprenant les étapes dans lesquelles : on étend, dans la direction axiale, une carcasse (12) à partir d'une première portion faisant office de talon jusqu'à une deuxième portion faisant office de talon ; on dispose une bande de roulement (14), dans la direction radiale, à l'extérieur de la carcasse (12) ; on procure un flanc (16) qui englobe un épaulement (18) qui s'étend dans la direction de la bande de roulement (14) ; on procure une structure de renforcement (20, 60) et on positionne la structure de renforcement (20, 60), dans la direction radiale, entre la carcasse (12) et la bande de roulement (14) ; et on enroule en spirale une bande chevauchante (500) à une portion la plus externe, dans la direction radiale, de la structure de renforcement (20, 60) ; dans lequel la bande chevauchante (500) enroulée en spirale possède une largeur, de préférence uniforme, et comprend des groupes de 2 à 8 premiers câblés (510) de manière conjointe avec un nombre de 1 à 4 deuxièmes câblés (520) disposés entre les premiers cités, **caractérisé en ce que** (i) la matière des premiers câblés (510) est différente de la matière des deuxièmes câblés (520), et **en ce que** le bandage pneumatique est un bandage pneumatique destiné à un avion ; et/ou (ii) **en ce que** le diamètre des premiers câblés (510) est différent du diamètre des deuxièmes câblés (520).
